# EUROPÄISCHE PATENTANMELDUNG

(11) **EP 3 373 431 A1**
(43) Veröffentlichungstag der Anmeldung: **12.09.2018**
(21) Anmeldenummer: 17159393.2
(22) Anmeldetag: 06.03.2017
(51) Int. Cl.: H02M 1/32, H02M 5/458, H02M 1/36, H02M 7/797, H02M 7/537

(54) **EINSTELLBARER ENERGIEWANDLER ZUR UMWANDLUNG VON ELEKTRISCHER ENERGIE IN WÄRMEENERGIE**

(71) Anmelder: Siemens Aktiengesellschaft, 80333 München (DE)
(72) Erfinder: Lange, Robert, 08451 Crimmitschau (DE); Ehrentraut, Marco, 09116 Chemnitz (DE); Strobelt, Holger, 08328 Stützengrün (DE)

(57) **Zusammenfassung**

Ein einstellbarer Energiewandler zur Umwandlung von elektrischer Energie in Wärmeenergie, insbesondere zur Umwandlung von generatorisch erzeugter elektrischer Energie in Wärmeenergie in einem Zwischenkreisumrichter (50), umfasst eine Leistungshalbleiterschaltung (4, 12, 24, 41, 43), die elektrisch mit einer Gleichspannungs-Energiequelle (8; 8A, 8B) verbindbar ist. Die Leistungshalbleiterschaltung (4, 12, 24, 41, 43) ist ausgebildet, gesteuert Energie aus der Gleichspannungs-Energiequelle (8; 8A, 8B) in Verlustwärme umzuwandeln und abzuführen.

## Beschreibung

Die Erfindung betrifft einen einstellbaren Energiewandler zur Umwandlung von elektrischer Energie in Wärmeenergie, insbesondere zur Umwandlung von generatorisch erzeugter elektrischer Energie in Wärmeenergie in einem Zwischenkreisumrichter.

Ein Umrichter, auch als Wechselstrom-Umrichter und in Anlehnung an den englischen Begriff auch als AC/AC-Konverter bezeichnet, ist ein Stromrichter, der aus einer Wechselspannung bestimmter Frequenz und Amplitude eine in der Frequenz und/ oder der Amplitude geänderte Wechselspannung generiert. Der Umrichter ist ein elektronisches Gerät ohne mechanisch bewegte Komponenten.

Beim Aufbau von Umrichtern unterscheidet man grundsätzlich zwischen direkten und indirekten Umrichtern. Indirekte Umrichter arbeiten mit einem mit Gleichspannung oder Gleichstrom betriebenen Zwischenkreis; sie stellen im Prinzip eine Kombination von Gleichrichter und Wechselrichter dar. Bei einem indirekten Umrichter mit Gleichspannungszwischenkreis ist eine Zwischenkreiskapazität als Energiespeicher vorgesehen, wodurch die Eingangsspannung für den Wechselrichter in einem Toleranzbereich annähernd konstant gehalten werden kann. Direkte Umrichter, die auch als Matrix-Konverter bezeichnet werden, besitzen keinen Zwischenkreis zum Zwischenspeichern der umzuwandelnden Energie.

Breite Anwendung finden Umrichter bei der direkten Versorgung von elektrischen Maschinen, wie beispielsweise eines Drehstrommotors im Rahmen der elektrischen Antriebstechnik. Dabei wird die Frequenz des Umrichters vom Zustand des Motors abgeleitet.

Ist der Umrichter in der Lage, in beiden Drehrichtungen Energie aus dem Zwischenkreis zum Motor (motorischer Betrieb) und beim Bremsen auch zurück in den Zwischenkreis zu übertragen (generatorischer Betrieb), spricht man von einem Vierquadrantenbetrieb. Beim Bremsen wird Energie in den Zwischenkreis zurückgespeist.

Da der Zwischenkreis bedingt durch seinen Aufbau nur eine bestimmte Energiemenge zerstörungsfrei speichern kann, müssen Maßnahmen zur Reduzierung der gespeicherten Energie getroffen werden. Eine Variante ist die Umwandlung der elektrischen Energie in thermische Energie mit einem so genannten "Brems-Chopper". Das ist eine Widerstandsanordnung, auch Bremswiderstand genannt, die durch einen elektronischen Schalter getaktet dem Zwischenkreis zugeschaltet wird. Der Bremswiderstand stellt als elektronisch einstellbarer Widerstand einen Verbraucher für den Zwischenkreis dar und absorbiert die entstehende Bremsenergie. Mit einem Bremswiderstand können hohe Lasten schnell abgebremst werden. Anwendungen für Bremswiderstände finden sich zum Beispiel in der Industrie, der Bahntechnik und bei Windkraftanlagen.

Es soll noch erwähnt werden, dass durch den Einsatz von rückspeisefähigen Umrichtern die Energie aus dem Zwischenkreis durch Wechselrichtung auf Netzfrequenz in das Netz zurückübertragen werden kann. Bei Fahrzeugen kann die Bremsenergie zum Speisen der Bord-Batterien genutzt werden (Nutzbremsung).

Energierückspeise-Geräte können auch nachgerüstet werden. Sie werden dazu anstelle der Brems-Chopper an einen oder mehrere Umrichter angeschlossen.

Obwohl die klassische Bremsmethode mit Bremswiderstand einen relativ geringen Schaltungsaufwand bedingt und im Betrieb sehr robust ist, gibt es doch einige Nachteile, die durchaus ins Gewicht fallen können. Im Brems-Chopper stellt der Bremswiderstand einen nicht zu vernachlässigenden Kostenfaktor dar. Zusätzlich muss für den Bremswiderstand ein nicht unerheblicher Einbauplatz reserviert werden. Zudem müssen im konstruktiven Aufbau des Brems-Choppers die unterschiedlichsten Bauformen von Bremswiderständen berücksichtigt werden. Der Bremswiderstand erfordert zusätzlich Anschlussleitungen und eine aufwändige Anschluss- und/oder Steckverbindungstechnik zur Verbindung mit dem getakteten Halbleiter. Dadurch gestaltet sich eine automatische Fertigung aufwendig.

Die Aufgabe der vorliegenden Erfindung besteht darin, einen einstellbaren Energiewandler zur Umwandlung von elektrischer Energie in Wärmeenergie, insbesondere zur Umwandlung von generatorisch erzeugter elektrischer Energie in Wärmeenergie in einem Zwischenkreisumrichter, anzugeben, der einen geringen Einbauplatz benötigt und der mit einem geringen Fertigungsaufwand kostengünstig herstellbar ist und eine vergleichsweise breite Lieferantenauswahl gewährleistet.

Eine weitere Aufgabe der vorliegenden Erfindung besteht darin, einen Zwischenkreisumrichter mit einem einstellbaren Energiewandler zur Umwandlung von elektrischer Energie in Wärmeenergie anzugeben, wobei einstellbare Energiewandler einen geringen Einbauplatz benötigt und mit einem geringen Fertigungsaufwand kostengünstig herstellbar ist und eine vergleichsweise breite Lieferantenauswahl gewährleistet.

Die erstgenannte Aufgabe wird durch einen einstellbaren Energiewandler mit den Merkmalen des Patentanspruchs 1 gelöst. Dabei umfasst der einstellbare Energiewandler eine Leistungshalbleiterschaltung, die elektrisch mit einer Gleichspannungs-Energiequelle verbindbar ist, wobei die Leistungshalbleiterschaltung ausgebildet ist, gesteuert Energie aus der Gleichspannungs-Energiequelle in Verlustwärme umzuwandeln und abzuführen.

Im Unterschied zu der eingangs beschriebenen Ausführung des Energiewandlers als Brems-Chopper wird bei der erfindungsgemäßen Ausführung elektrische Energie aus einer Gleichspannung-Energiequelle gezielt über in der Leistungshalbleiterschaltung entstehende Durchlass- und/oder Schaltverluste in Wärmeenergie umgewandelt. Bei dem erfindungsgemäßen einstellbaren Energiewandler entfällt somit grundsätzlich ein zusätzlicher ohmscher Widerstand, da die Verluste gezielt beim Betrieb in der Halbleiterschaltung selbst erzeugt werden. So entfällt z.B. bei einem Einsatz als Brems-Chopper der im Stand der Technik notwendige Bremswiderstand. Damit ist der erfindungsgemäße einstellbare Energiewandler kostengünstiger herzustellen, besitzt einen kompakten und platzsparenden Aufbau und ist einfach zu handhaben. Ein geringes Bauvolumen ergibt sich auch daher, weil der Verlustleistung-Volumen-Faktor eines Leistungshalbleiters technologisch bedingt höher ist als bei einem Bremswiderstand. Von Vorteil ist auch, dass die Leistungshalbleiterschaltung mit Standard-Leistungshalbleitern aufgebaut werden kann. Standard-Leistungshalbleiter werden von vielen Herstellern angeboten, wodurch eine hohe Verfügbarkeit der einzubauenden Leistungshalbleiter gewährleistet ist. Wegen der hohen Herstellstückzahlen von Standard-Leistungshalbleitern sind deren Beschaffungskosten niedrig, was insbesondere zusammen mit einer automatisierten Fertigung zu niedrigen Fertigungskosten beim Umrichter führt.

Als Gleichspannungs-Energiequelle kommt beispielsweise eine elektrische Batterie, eine elektrische Kapazität oder auch ein elektrischer Motor, der im Generatorbetrieb arbeitet, in Betracht.

Vorteilhafte Ausgestaltungen des einstellbaren einstellbaren Energiewandlers sind Gegenstand der abhängigen Ansprüche 2 bis 10.

Eine vorteilhafte Ausgestaltung der Erfindung ist in Anspruch 4 angegeben. Danach ist die Leistungshalbleiterschaltung für Linearbetrieb als einstellbarer Widerstand ausgebildet. Die in den Zwischenkreis eingespeiste Bremsenergie wird bei dieser Ausgestaltung über Durchlassverluste der Leistungshalbleiterschaltung abgeführt. Diese Ausgestaltung ist durch einen geringen Schaltungsaufwand gekennzeichnet. Sie erfordert auch keine speziellen Maßnahmen zur Sicherstellung der elektromagnetischen Verträglichkeit. Damit ist diese Ausgestaltung kostengünstig herzustellen.

Eine vorteilhafte Ausgestaltung des einstellbaren Energiewandlers zum Betrieb in Umrichtern mit einer hohen Zwischenkreisspannung ergibt sich durch die Merkmale des Anspruchs 5. Der einstellbare Energiewandler für diese Anwendung zeichnet sich dadurch aus, dass die Leistungshalbleiterschaltung zwei in Reihe geschaltete Halbleiterbauelemente umfasst, dass die beiden Halbleiterbauelement für Linearbetrieb ausgebildet sind, dass eines des Halbleiterbauelemente als regelbarer Widerstand und das andere der Halbleiterbauelemente als Längsregler mit einem fest einstellbaren Spannungsabfall ausgebildet ist, dass die Reihenschaltung der Halbleiterbauelemente ausgebildet ist zum elektrischen Verbinden mit einer Reihenschaltung von zwei die Zwischenkreiskapazität bildenden Teilkapazitäten und dass jedes Halbleiterbauelement zur Parallelverbindung mit einer der Teilkapazitäten ausgebildet ist.

Über eine entsprechende Dimensionierung der Halbleiterbauelemente lässt sich mit dieser Ausgestaltung auch eine Zwischenkreis-Symmetrierung erreichen. Durch den Betrieb eines der Halbleiterbauelemente als Längsregler mit einem fest einstellbaren Spannungsabfall und des anderen Halbleiterbauelements als regelbarer Widerstand werden Instabilitäten in der Regelung vermieden. Diese Ausgestaltung ist durch einen geringen Schaltungsaufwand gekennzeichnet. Da auch hier die Halbleiterbauelemente im Linearbetrieb arbeiten, erfordert diese Ausgestaltung wie die Ausgestaltung nach Anspruch 2 auch keine speziellen Maßnahmen zur Sicherstellung der elektromagnetischen Verträglichkeit. Sie ist ebenfalls kostengünstig herzustellen.

Unter einem Halbleiterbauelement soll ein einzelner Halbleiter, wie beispielsweise ein IGBT (Insulated Gate Bipolar Transistor), wie auch eine Zusammenschaltung von einzelnen Halbleitern verstanden werden.

Eine weitere, vorteilhafte Ausgestaltung ist durch die Merkmale des Anspruchs 6 gegeben. Danach ist der einstellbare Energiewandler dadurch gekennzeichnet, dass die Leistungshalbleiterschaltung für Schaltbetrieb zur Umwandlung und Abführung der Energie über Schaltverluste ausgebildet ist. Die abzuführende Energie wird über die Schaltfrequenz gesteuert. Leistungshalbleiterschalter für Schaltbetrieb sind Standardbauelemente, die in einer Vielzahl von Bauformen und mit unterschiedlichen Spezifikationen, insbesondere auch für hohe Schaltleistungen, erhältlich sind.

Eine besonders vorteilhafte Ausgestaltung ergibt sich durch den Gegenstand des Anspruchs 7. Danach umfasst die Leistungshalbleiterschaltung zwei elektrisch in Reihe geschaltete, unabhängig voneinander ansteuerbare Halbleiterbauelemente und mindestens eine elektrisch parallel zu jeweils mindestens einem der Halbleiterbauelemente geschaltete Schaltverlustkapazität. Bei dieser Ausführung kann die abzuführende Verlustleistung über die Höhe der der Schaltfrequenz zusammen mit der Größe der Schaltverlustkapazität eingestellt werden. Hohe Stromspitzen können durch ein langsames Einschalten der Halbleiterbauelemente vermieden werden. Im Betrieb ist in einer ersten Phase das parallel zur (mindestens einen) Schaltverlustkapazität geschaltete Halbleiterbauelement geöffnet. Gleichzeitig wird die (mindestens eine) Schaltverlustkapazität durch Schließen des zu ihr in Reihe geschalteten Halbleiterbauelements aus der Zwischenkreiskapazität aufgeladen. In einer zweiten Phase öffnet nach der Aufladung der (mindestens einen) Schaltverlustkapazität das zu ihr in Reihe geschaltete Halbleiterbauelement. Gleichzeitig bzw. nahezu gleichzeitig, da in der Praxis zur Vermeidung von Kurzschlüssen eine Totzeit zwischen dem Öffnen und Schließen eingeführt sein kann, wird durch Schließen des parallel zur (mindestens einen) Schaltverlustkapazität geschalteten Halbleiterbauelements die (mindestens eine) Schaltverlustkapazität wieder entladen. Dieser Vorgang wird zyklisch mit einer Schaltfrequenz wiederholt, so dass die Schaltverluste der abzuführenden Bremsenergie entsprechen.

Eine weitere vorteilhafte Ausgestaltung ist durch die Merkmale des Anspruchs 9 gekennzeichnet. Danach ist mit der Verbindungsstelle der beiden Halbleiterbauelemente ein Anschluss eines ohmschen Widerstands verbunden und ist der andere Anschluss des ohmschen Widerstands zur Verbindung mit dem Verbindungspunkt von zwei in Reihe geschalteten, die Zwischenkreiskapazität des Zwischenkreisumrichters bildenden Teilkapazitäten ausgebildet. So lässt sich über das Tastverhältnis die statische Aufteilung der Zwischenkreisspannung an den Halbleiterbauelementen und somit auch an den Teilkapazitäten einstellen. Um die Verluste so gering wie möglich zu halten, arbeitet die Halbrücke mit den beiden Halbleiterbauelementen im Normalbetrieb, also wenn keine Energie aus dem Zwischenkreis abgeführt werden muss, mit niedriger Schaltfrequenz.

Bei einer weiteren vorteilhaften Ausgestaltung ist die Gegentakt-Ansteuerschaltung gemäß den Merkmalen des Anspruchs 10 ausgebildet, die beiden Halbleiterbauelemente mit einem gleichen Tastverhältnis anzusteuern. So kann eine spannungsmäßige Symmetrierung von zwei in Reihe geschalteten Teilkapazitäten erreicht werden.

Bei einer weiteren vorteilhaften Ausgestaltung ist gemäß Anspruch 11 die Leistungshalbleiterschaltung mit Schaltmitteln verbunden, die die Leistungshalbleiterschaltung wahlweise in Reihe oder parallel zur Zwischenkreiskapazität schalten können. Damit kann der einstellbare Energiewandler sowohl zur aktiv gesteuerten Aufladung der Zwischenkreiskapazität wie auch zum Abbau von Bremsenergie benutzt werden. In Reihe geschaltet mit der Zwischenkreiskapazität begrenzt der einstellbare Energiewandler bei der Aufladung auftretende Stromspitzen, während bei der Parallelschaltung die durch die zugeführte Bremsenergie verursachten Spannungserhöhungen an der Zwischenkreiskapazität abgebaut werden können.

Zum Betrieb an Umrichtern mit hoher Zwischenkreisspannung werden gemäß den Merkmalen des Anspruchs 12 mindestens drei Halbleiterbauelemente in Reihe geschaltet, wobei parallel zu mindestens zwei der drei Halbleiterbauelemente jeweils eine Schaltverlustkapazität geschaltet ist. Entsprechend der abzuführenden Bremsenergie wird eine entsprechende Anzahl von Schaltverlustkapazitäten aufgeladen und wieder entladen.

Die zweitgenannte Aufgabe wird durch den Gegenstand des Anspruchs 13 gelöst. Danach umfasst ein Zwischenkreisumrichter einen einstellbaren Energiewandler nach einem der Ansprüche 1 bis 12.

Eine vorteilhafte Ausgestaltung des Zwischenkreisumrichters ergibt sich durch den Gegenstand des Anspruchs 14. Dieser Zwischenkreisumrichter kann besonders hohe Bremsleistungen bewältigen.

Die vorstehend beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen die Prinzipschaltbilder oder Blockschaltbilder in:
- FIG 1: einen als regelbaren Widerstand ausgebildeten einstellbaren Energiewandler,
- FIG 2: einen für Längsreglerbetrieb bei hoher Zwischenkreisspannung ausgebildeten einstellbaren Energiewandler,
- FIG 3: einen für Schaltbetrieb ausgebildeten einstellbaren Energiewandler,
- FIG 4: einen einstellbaren Energiewandler, der sowohl zur Umwandlung von Bremsenergie sowie zur aktiven Vorladung der Zwischenkreiskapazität ausgebildet ist,
- FIG 5: einen einstellbaren Energiewandler, der zusätzlich einen Bremswiderstand umfasst,
- FIG 6: einen einstellbaren Energiewandler, der sowohl zur Umwandlung von Bremsenergie als auch zur Symmetrierung des Zwischenkreises ausgebildet ist,
- FIG 7: einen einstellbaren Energiewandler mit mehreren in Reihe geschalteten Halbleiterbauelementen in einem ersten Betriebszustand zur Abführung von Bremsenergie,
- FIG 8: den einstellbaren Energiewandler nach FIG 7 in einem zweiten Betriebszustand,
- FIG 9: einen einstellbaren Energiewandler mit mehreren in Reihe geschalteten Halbleiterbauelementen in einem ersten Betriebszustand,
- FIG 10: den einstellbaren Energiewandler nach FIG 9 in einem zweiten Betriebszustand,
- FIG 11: den einstellbaren Energiewandler nach FIG 9 in einem dritten Betriebszustand und
- FIG 12: einen Zwischenkreisumrichter mit zwei im Zwischenkreis parallel geschalteten einstellbaren Energiewandlern.

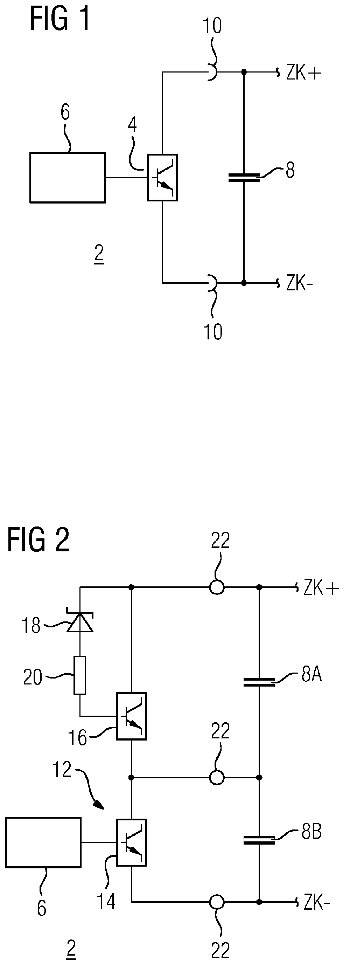

FIG 1 zeigt in einem Blockschaltbild einen elektronischen Energiewandler 2 zur einstellbaren oder steuerbaren Umwandlung von elektrischer Energie in Wärme. Der elektronische Energiewandler 2 umfasst in einer ersten Ausführungsform eine erste Leistungshalbleiterschaltung 4 und eine damit verbundene Ansteuerschaltung 6. Die erste Leistungshalbleiterschaltung 4 ist über eine elektrische Steckverbindung 10 direkt elektrisch parallel mit einer Zwischenkreiskapazität 8 eines Zwischenkreisumrichters (hier nicht dargestellt) lösbar verbunden. Alternativ kann die elektrische Verbindung auch anders ausgestaltet sein, beispielsweise als Schraub- oder Lötverbindung. An der Zwischenkreiskapazität 8 liegen die Zwischenkreis-Potenziale ZK+ und ZK- an. Der elektronische Energiewandler 2 wandelt beim Abbremsen eines an den Zwischenkreisumrichter angeschlossenen Elektromotors (hier nicht dargestellt) generatorisch erzeugte elektrische Energie in Wärme um. Im Stand der Technik ist diese grundsätzliche Funktionsweise zum Abbremsen eines generatorisch betriebenen Motors mit Hilfe eines so genannten "Brems-Choppers" realisiert. Im hier beschriebenen elektronischen Energiewandler 2 ist die erste Leistungshalbleiterschaltung 4 selbst für Linearbetrieb ausgebildet und arbeitet als regelbarer Widerstand. Die Umwandlung in Wärme erfolgt somit über Durchlassverluste in der Leistungshalbleiterschaltung 4. Damit entfällt der im Stand der Technik benötigte Bremswiderstand.

FIG 2 zeigt eine Ausführungsform eines Gleichspannungszwischenkreises, wie er insbesondere bei höheren Zwischenkreisspannungen verwendet wird. Hier ist die Zwischenkreiskapazität 8 auf zwei oder mehr in Reihe geschaltete Teilkapazitäten 8A und 8B aufgeteilt, die im Allgemeinen gleiche Kapazitätswerte aufweisen. Zur Umwandlung von elektrischer Energie aus einem derart aufgebauten Zwischenkreis in Wärme ist in einer zweiten Ausführungsform des elektronischen Energiewandlers 2 eine zweite Leistungshalbleiterschaltung 12 vorgesehen, die ein erstes und ein zweites Halbleiterbauelement 14 bzw. 16 umfasst. Die beiden Halbleiterbauelemente 14, 16 sind in Reihe geschaltet. Die beiden Halbleiterbauelemente 14, 16 sind für Linearbetrieb ausgebildet. Das erste Halbleiterbauelement 14 ist ähnlich wie bei der ersten Leistungshalbleiterschaltung 4 als regelbarer Widerstand ausgebildet, während das zweite Halbleiterbauelement 16 als Längsregler mit einem fest einstellbaren Spannungsabfall realisiert ist. Die Einstellung des Spannungsabfalls erfolgt bei dem zweiten Halbleiterbauelement 16 durch eine Reihenschaltung einer Zenerdiode 18 mit einem Widerstand 20. Zur Einstellung des gewünschten Spannungsabfalls können auch andere Schaltungen und Technologien als die vorstehend beschriebene Reihenschaltung von Zenerdiode 18 und Widerstand 20 verwendet werden. Die zweite Leistungshalbleiterschaltung 12 wird hier über feste elektrische Verbindungen 22 mit den Teilkapazitäten 8A und 8B elektrisch derart verbunden, so dass die Halbleiterbauelemente 14, 18 jeweils einzeln parallel mit jeweils einer der Teilkapazitäten 8A, 8B verbunden sind.

Die Notwendigkeit einer Reihenschaltung von Halbleiterbauelementen ist im Allgemeinen abhängig von der Spannungsfestigkeit bzw. von einzuhaltenden Luft- und Kriechstrecken der Bauelemente und/oder von der benötigten Verlustleistung zur Umwandlung der elektrischen Energie in Wärmeenergie.

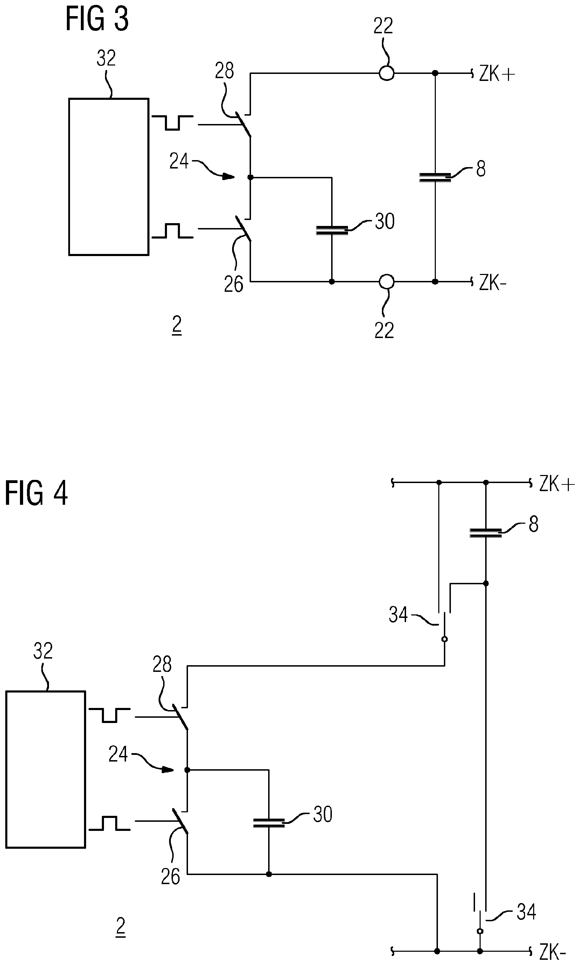

Die folgenden FIG 3 bis FIG 6 zeigen Ausführungsformen des elektronischen Energiewandlers 2, die Leistungshalbleiterschaltungen umfassen, die für Schaltbetrieb ausgebildet sind. Damit erfolgt die Umwandlung und Abführung der elektrischen Energie aus dem Zwischenkreis im Wesentlichen über Schaltverluste. "Im Wesentlichen" soll hier bedeuten, dass abhängig vom Durchlasswiderstand der verwendeten Leistungshalbleiterschaltungen, der bei einem idealen Schalter im geschlossenen Zustand Null ist, in einem ganz geringen Maße auch noch Durchlassverluste entstehen können.

FIG 3 zeigt eine dritte Ausführungsform des elektronischen Energiewandlers 2 mit einer dritten Leistungshalbleiterschaltung 24 mit einem dritten und einem vierten elektrisch in Reihe geschalteten Halbleiterbauelement 26 bzw. 28. Die beiden Halbleiterbauelemente 26, 28 sind beispielsweise mittels Bipolartransistoren mit isolierter Gate-Elektrode (englisch: Insulated Gate Bipolar Transistor, kurz IGBT) realisiert. Sie arbeiten als Schalter und sind unabhängig voneinander ansteuerbar. Zu dem Halbleiterbauelement 26 ist elektrisch parallel eine Schaltverlustkapazität 30 geschaltet. Die Reihenschaltung der beiden Halbleiterbauelemente 26, 28 ist über feste elektrische Verbindungen 22 parallel zur Zwischenkreiskapazität 8 geschaltet.

Die Ansteuerung der beiden Halbleiterbauelemente 26, 28 erfolgt hier beispielsweise über eine Gegentakt-Ansteuerschaltung 32. In einem ersten Betriebszustand wird das Halbleiterbauelement 26 als Schalter geöffnet und das Halbleiterbauelement 28 als Schalter geschlossen. Damit fließt aus der Zwischenkreiskapazität 8 elektrische Energie in die Schaltverlustkapazität 30. Im zweiten Betriebszustand wird das Halbleiterbauelement 28 als Schalter geöffnet und das Halbleiterbauelement 26 als Schalter geschlossen. Die in der Schaltverlustkapazität 30 gespeicherte elektrische Energie wird dabei im Schaltvorgang über Schaltverluste in Wärme umgewandelt. Die Menge der umgewandelten Energie wird bestimmt durch die Größe der Schaltverlustkapazität 30 und der Frequenz des Lade-Entlade-Zyklus, also der Schaltfrequenz.

Bei der in FIG 4 dargestellten Ausführungsform des elektronischen Energiewandlers 2 ist die dritte Halbleiterschaltung 24 nach FIG 3 über ein mechanisches oder elektronisches Schaltelement 34 mit einer Umschalt- und einer Schließfunktion mit der Zwischenkreiskapazität 8 verbunden. Damit ist es möglich, die dritte Leistungshalbleiterschaltung 24 entweder in Reihe oder parallel zur Zwischenkreiskapazität 8 zu schalten. In Reihe geschaltet kann so eine anfangs ungeladene Zwischenkreiskapazität 8 mit einer gewünschten Ladezeit (engl. Inrush-Begrenzung) auf die Zwischenkreisspannung aufgeladen werden. Parallel geschaltet kann die dritte Halbleiterschaltung 24 generatorisch erzeugte elektrische Energie in Wärmeenergie umwandeln.

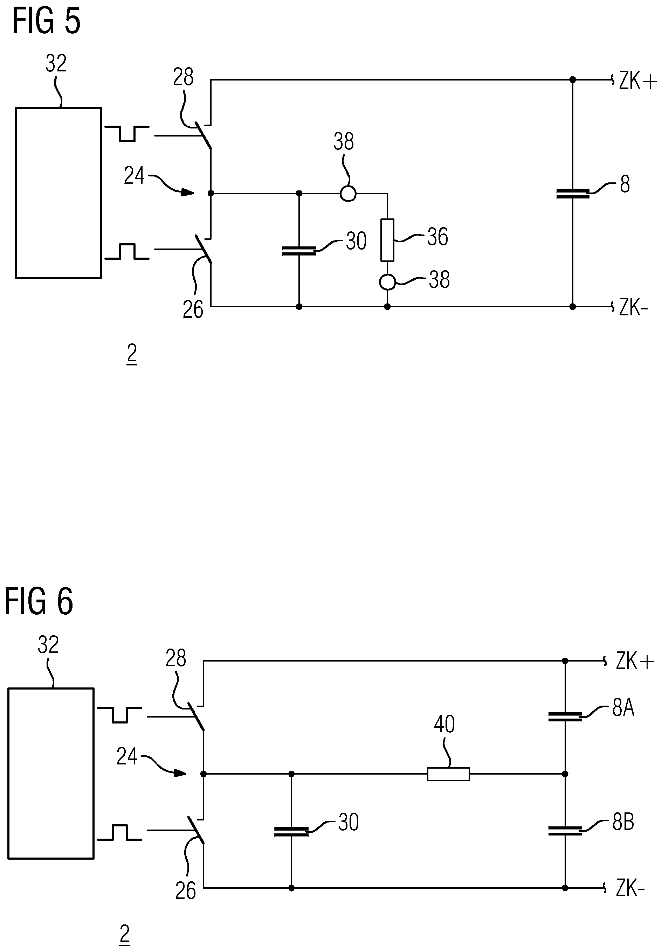

In FIG 5 ist eine weitere Ausgestaltung des elektronischen Energiewandlers 2 dargestellt, bei der die dritte Halbleiterschaltung 24 mit einem Bremswiderstand 36 verbunden ist. Der Bremswiderstand 36 ist von dem elektronischen Energiewandler 2 getrennt angeordnet und über elektrische Anschlussmittel 38 elektrisch parallel mit der Schaltverlustkapazität 30 verbindbar. Über eine entsprechende Ansteuerung der beiden Halbleiterbauelemente 26 und 28 lässt sich die Abführung der elektrischen Energie aus der Zwischenkreiskapazität 8 steuern. Diese Ausführungsform stellt funktionell eine Kombination von einem elektronischen Energiewandler und einem Brems-Chopper dar. Wie schon weiter oben beschrieben ist, ist die über Schaltverluste abzuführende Wärmemenge im Wesentlichen abhängig von der Schaltfrequenz. Die über ohmsche Verluste abzuführende Wärmemenge ist im Wesentlichen abhängig vom Tastverhältnis. Über die Einstellung der Schaltfrequenz und des Tastverhältnisses lässt sich die Ableitung der elektrischen Energie aus der Zwischenkreiskapazität 8 gezielt auf den elektronischen Energiewandler 2 und den Bremswiderstand 36 aufteilen.

Mit der in FIG 6 dargestellten Ausführungsform lässt sich zusätzlich zur Ableitung von Energie aus dem Zwischenkreis bei zwei in Reihe geschalteten Teilkapazitäten 8A und 8B die Zwischenkreisspannung symmetrisch auf diese aufteilen. Die dritte Halbleiterschaltung 24 nach FIG 3 ist dazu durch eine Anbindung des Verbindungspunktes der beiden Halbleiterbauelemente 24, 28 mit dem Verbindungspunkt der beiden Teilkapazitäten 8A, 8B über einen hochohmigen Widerstand 40 ergänzt. Zur Symmetrierung werden die beiden Halbleiterbauelemente 24, 26 mit einem gleichen Tastverhältnis, d.h. mit einem Tastverhältnis von 50 %, angesteuert. Um die Verluste im Normalbetrieb, also wenn motorischer Betrieb des angeschlossenen Motors vorliegt, so gering wie möglich zu halten, werden die beiden Halbleiterbauelemente 24, 28 mit niedriger Schaltfrequenz gepulst.

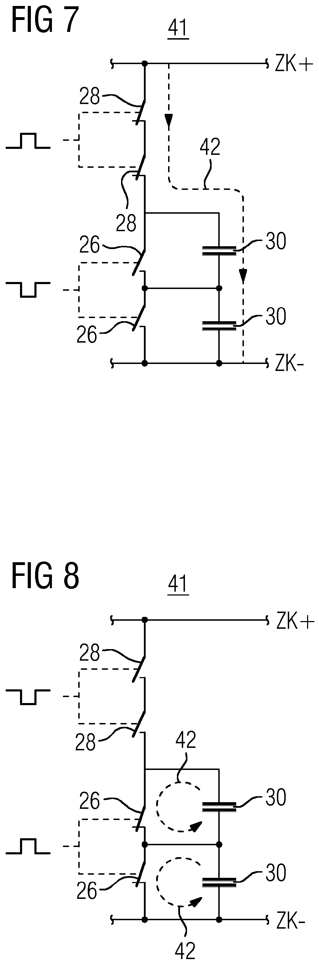

Die FIG 7 bis 11 sollen verschiedene Betriebszustände am Beispiel des elektronischen Energiewandlers 2 in einer vierten und fünften Leistungshalbleiterschaltung 41 bzw. 43 erläutern. Bei den FIG 7 bis 11 sind mehrere Halbleiterbauelemente 26, 28 in Reihe geschaltet. Eine Reihenschaltung der Halbleiterbauelemente 26, 28 kommt beispielsweise bei hohen Zwischenkreisspannungen und einer gewünschten Aufteilung der Verluste auf mehrere Halbleiterbauelemente zum Einsatz.

In FIG 7 und FIG 8 ist in einer vierten Ausführungsform der Leistungshalbleiterschaltung 41 eine Reihenschaltung von zwei Halbleiterbauelementen 26 und eine Reihenschaltung von zwei Halbleiterbauelementen 28 miteinander in Reihe geschaltet. Jeweils eine Schaltverlustkapazität 30 ist parallel mit jeweils einem Halbleiterbauelement 26 verbunden. Die Schaltverlustkapazitäten 30 besitzen hier gleiche Kapazitätswerte. Entsprechend einer gewünschten Spannungs- und Verlustaufteilung können die Schaltverlustkapazitäten auch verschiedene Kapazitätswerte besitzen. FIG 7 zeigt den Betriebszustand in einer ersten Betriebsphase, wenn die beiden Schaltverlustkapazitäten 30 ungeladen sind. Die an den Schaltverlustkapazitäten 30 anliegende Spannung ist Null. Werden die Halbleiterbauelemente 26 geöffnet und die Halbleiterbauelemente 28 geschlossen, erfolgt ein Energietransport von der Zwischenkreiskapazität 8 zu den Schaltverlustkapazitäten 30. Der sich einstellende Stromfluss ist durch eine strichlierte und mit Pfeilen versehene Linie 42 dargestellt. Am Ende der ersten Betriebsphase (Aufladephase) liegt an jeder Schaltverlustkapazität 30 im Idealfall die halbe Zwischenkreisspannung an, also die Hälfte der Differenz der Zwischenkreis-Potenziale ZK+ und ZK-.

FIG 8 zeigt den Betriebszustand der beiden Verlustkapazitäten 30 in einer zweiten Betriebsphase, der Entladephase. Dazu werden die beiden Halbleiterbauelemente 28 geöffnet und die beiden Halbleiterbauelemente 26 geschlossen. Die Entladeströme der beiden Schaltverlustkapazitäten 30 sind der Richtung nach durch die strichlierten Linien 42 symbolisiert. Am Ende der Entladephase ist die Spannung an den Schaltverlustkapazitäten 30 Null, an den Halbleiterbauelementen 28 liegt dann im Idealfall jeweils die halbe Zwischenkreisspannung an. Alternativ zur dargestellten Anordnung, bei der die Schaltverlustkapazitäten 30 am unteren Zwischenkreis-Potenzial ZK- des Zwischenkreises elektrisch angehängt sind, können die Schaltverlustkapazitäten 30 auch am oberen Zwischenkreis-Potenzial ZK+ angehängt werden. Die Ansteuerung der Halbleiterbauelemente 26 und 28 muss dann entsprechend angepasst werden.

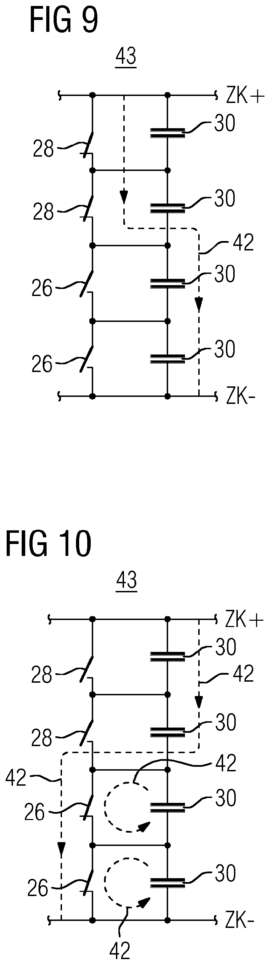

Bei der in den FIG 9 bis FIG 11 dargestellten Ausführungsform des elektronischen Energiewandlers 2 mit einer fünften Leistungshalbleiterschaltung 43 sind - wie bei der Ausführungsform nach den FIG 7 und FIG 8 - jeweils zwei Halbleiterbauelemente 26, 28 in Reihe geschaltet. Jedoch ist hier zu jedem der Halbleiterbauelemente 26, 28 jeweils eine Schaltverlustkapazität 30 mit beispielsweise gleichen Kapazitätswerten parallel geschaltet.

FIG 9 zeigt die Anfangsphase (Ladephase) beim Betrieb der fünften Leistungshalbleiterschaltung 43. In der Anfangsphase sind die beiden Halbleiterbauelemente 26 geöffnet und die beiden Halbleiterbauelemente 28 geschlossen. In der Anfangsphase werden somit die unteren beiden Schaltverlustkapazitäten 30 aufgeladen, am Ende liegt an jeder Schaltverlustkapazität 30 bei gleichen Kapazitätswerten im Idealfall die halbe Zwischenkreisspannung an.

FIG 10 zeigt einen ersten Entlade-Lade-Zyklus im Betrieb der Leistungshalbleiterschaltung 43. In dem ersten Entlade-Lade-Zyklus werden die unteren beiden Verlustleistungskapazitäten 30 entladen. Dazu werden die oberen beiden Halbleiterbauelemente 28 geöffnet und die unteren beiden Halbleiterbauelemente 26 geschlossen. Gleichzeitig mit der Entladung der unteren beiden Schaltverlustkapazitäten 30 werden in dem ersten Entlade-Lade-Zyklus die oberen beiden Schaltverlustkapazitäten 30 aufgeladen. Die sich dabei einstellenden Ströme veranschaulichen die strichlierten Linien 42.

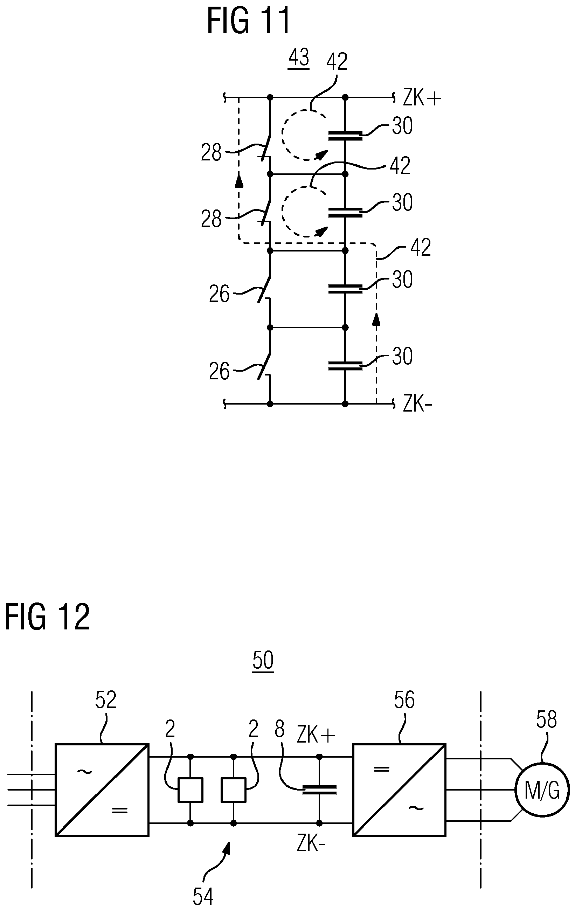

FIG 11 zeigt einen zweiten Entlade-Lade-Zyklus, bei dem die unteren beiden Halbleiterbauelemente 26 geöffnet und die oberen beiden Halbleiterbauelemente 28 geschlossen werden. In dem zweiten Entlade-Lade-Zyklus werden die oberen beiden Schaltverlustkapazitäten 30 entladen und die unteren beiden Schaltverlustkapazitäten 30 aufgeladen. Die anhand von FIG 10 und FIG 11 beschriebenen beiden Entlade-Lade-Zyklen werden zyklisch wiederholt, bis die überschüssige Energie aus dem Zwischenkreis abgebaut ist.

Die vorstehend an dem Ausführungsbeispiel des elektronischen Energiewandlers nach den FIG 9 bis 11 beschriebenen Schaltmuster und Schaltreihenfolgen geben nur eine von mehreren möglichen Realisierungen an. Es soll darauf hingewiesen werden, dass die Energiewandlung ohne Änderung des Prinzips auch mit anderen Schaltmustern und Schaltreihenfolgen realisiert werden kann.

FIG 12 zeigt das Blockschaltbild eines Spannungszwischenkreisumrichters 50, in Kurzform auch U-Umrichter genannt, englisch: Voltage Source Inverter, kurz VSI. Der Spannungszwischenkreisumrichter 50 umfasst einen Gleichrichter 52, einen Gleichspannungszwischenkreis 54 und einen Wechselrichter 56. Im Gleichspannungszwischenkreis 54 sind das obere Zwischenkreis-Potenzial ZK+ und das untere Zwischenkreis-Potenzial ZK- über die Zwischenkreiskapazität 8 verbunden. Der Gleichrichter 52 ist eingangsseitig mit einem elektrischen Energienetz, der Wechselrichter 54 ist ausgangsseitig mit einem elektrischen Motor 58 verbunden.

Der elektrische Motor 58 kann sowohl motorisch (M) wie auch generatorisch (G) arbeiten, dies ist durch das Symbol "M/G" in FIG 12 veranschaulicht. Im Generatorbetrieb (G), bei dem der Motor 58 abgebremst wird, wird elektrische Energie über den Wechselrichter 56 in den Gleichspannungszwischenkreis 54 und damit in die Zwischenkreiskapazität 8 gespeist. Diese nun in elektrischer Form vorliegende Bremsenergie wird mit mindestens einem zur Zwischenkreiskapazität 8 parallelgeschalteten erfindungsgemäßen elektronischen Energiewandler 2, beispielsweise mit einem elektronischen Energiewandler, wie er anhand der FIG 1 bis FIG 11 vorstehend beschrieben ist, in Wärme umgewandelt und an die Umgebung abgeführt. Die Umwandlung von elektrischer Energie in Wärmeenergie wird abhängig von der jeweils erzeugten Bremsenergie gesteuert oder eingestellt. In FIG 12 sind zwei elektronische Energiewandler 2 parallel geschaltet, wodurch höhere Bremsleistungen in Wärme umgewandelt werden können.

## Patentansprüche

1. Einstellbarer Energiewandler zur Umwandlung von elektrischer Energie in Wärmeenergie, insbesondere zur Umwandlung von generatorisch erzeugter elektrischer Energie in Wärmeenergie in einem Zwischenkreisumrichter (50), mit einer Leistungshalbleiterschaltung (4, 12, 24, 41, 43), die elektrisch mit einer Gleichspannungs-Energiequelle (8; 8A, 8B) verbindbar ist, wobei die Leistungshalbleiterschaltung (4, 12, 24, 41, 43) ausgebildet ist, gesteuert Energie aus der Gleichspannungs-Energiequelle (8; 8A, 8B) in Verlustwärme umzuwandeln und abzuführen.

2. Einstellbarer Energiewandler nach Anspruch 1, **dadurch gekennzeichnet, dass** die Leistungshalbleiterschaltung (4, 12, 24, 41, 43) parallel zur Gleichspannungs-Energiequelle (8; 8A, 8B) schaltbar ist.

3. Einstellbarer Energiewandler nach Anspruch 1 oder 2, **dadurch gekennzeichnet, dass** die Gleichspannungs-Energiequelle eine Zwischenkreiskapazität (8; 8A, 8B) eines Zwischenkreisumrichters (50) umfasst.

4. Einstellbarer Energiewandler nach einem der vorstehenden Ansprüche, **dadurch gekennzeichnet, dass** die Leistungshalbleiterschaltung (4, 12) für Linearbetrieb als einstellbarer Widerstand ausgebildet ist.

5. Einstellbarer Energiewandler nach Anspruch 3 oder 4, **dadurch gekennzeichnet, dass** die Leistungshalbleiterschaltung (12) zwei in Reihe geschaltete Halbleiterbauelemente (14, 16) umfasst, dass die beiden Halbleiterbauelemente (14, 16) für Linearbetrieb ausgebildet sind, dass eines des Halbleiterbauelemente (14) als regelbarer Widerstand und das andere der Halbleiterbauelemente (16) als Längsregler mit einem fest einstellbaren Spannungsabfall ausgebildet ist, dass die Reihenschaltung der Halbleiterbauelemente (14, 16) ausgebildet ist zum elektrischen Verbinden mit einer Reihenschaltung von zwei die Zwischenkreiskapazität bildenden Teilkapazitäten (8A, 8B) und dass jedes Halbleiterbauelement (14, 16) zur Parallelverbindung mit einer der Teilkapazitäten (8A, 8B) ausgebildet ist.

6. Einstellbarer Energiewandler nach einem der Ansprüche 1 bis 3, **dadurch gekennzeichnet, dass** die Leistungshalbleiterschaltung (24, 41, 43) für Schaltbetrieb zur Umwandlung und Abführung der Energie über Schaltverluste ausgebildet ist.

7. Einstellbarer Energiewandler nach Anspruch 6, **dadurch gekennzeichnet, dass** die Leistungshalbleiterschaltung (24) zwei elektrisch in Reihe geschaltete, unabhängig voneinander ansteuerbare Halbleiterbauelemente (26, 28) umfasst und dass elektrisch parallel zu mindestens einem der Halbleiterbauelemente (26) jeweils eine Schaltverlustkapazität (30) geschaltet ist.

8. Einstellbarer Energiewandler nach Anspruch 7, **dadurch gekennzeichnet, dass** die beiden Halbleiterbauelemente (26, 28) mit einer Gegentakt-Ansteuerschaltung (32) verbunden sind.

9. Einstellbarer Energiewandler nach Anspruch 7 oder 8, **dadurch gekennzeichnet, dass** mit der Verbindungsstelle der beiden Halbleiterbauelemente (26, 28) ein Anschluss eines ohmschen Widerstands (40) verbunden istm und dass der andere Anschluss des ohmschen Widerstands (40) ausgebildet ist zur Verbindung mit dem Verbindungspunkt von zwei in Reihe geschalteten, die Zwischenkreiskapazität des Zwischenkreisumrichters (50) bildenden Teilkapazitäten (8A, 8B).

10. Einstellbarer Energiewandler nach Anspruch 9, **dadurch gekennzeichnet, dass** die Gegentakt-Ansteuerschaltung (32) ausgebildet ist, die beiden Halbleiterbauelemente (26, 28) mit einem gleichen Tastverhältnis anzusteuern.

11. Einstellbarer Energiewandler nach einem der Ansprüche 6 bis 8, **dadurch gekennzeichnet,** das s die Leistungshalbleiterschaltung (24) mit Schaltmitteln (34) verbunden ist, die die Leistungshalbleiterschaltung (24) wahlweise in Reihe oder parallel zur Zwischenkreiskapazität (8) schalten können.

12. Einstellbarer Energiewandler nach einem der Ansprüche 7 bis 11, **dadurch gekennzeichnet, dass** die Leistungshalbleiterschaltung (41) mindestens drei in Reihe geschaltete Halbleiterbauelemente (26, 28) umfasst und dass zu mindestens zwei der drei Halbleiterbauelemente (26) jeweils eine Schaltverlustkapazität (30) geschaltet ist.

13. Zwischenkreisumrichter mit einem einstellbaren Energiewandler nach einem der vorstehenden Ansprüche.

14. Zwischenkreisumrichter mit mehreren parallel geschalteten einstellbaren Energiewandlern nach einem der Ansprüche 1 bis 12.
